# EUROPÄISCHE PATENTANMELDUNG

(11) **EP 3 301 737 A1**
(43) Veröffentlichungstag der Anmeldung: **04.04.2018**
(21) Anmeldenummer: 17193249.4
(22) Anmeldetag: 26.09.2017
(51) Int. Cl.: H01M 2/02, H01M 2/06, H01M 2/26, H01M 2/30, H01M 10/0525, H01M 10/0585, H01M 10/0587

(54) **GALVANISCHES ELEMENT**

(30) Priorität: 29.09.2016 DE 102016011684
(71) Anmelder: Advanced Lithium Systems Europe Defense Applications S.A., 10563 Athen (GR)
(72) Erfinder: Gehrmann, Ralf, 47239 Duisburg (DE); Ciecierski, Alfred, 46535 Dinslaken (DE)
(74) Vertreter: Demski, Siegfried

(57) **Zusammenfassung**

Die Erfindung betrifft ein galvanisches Element, insbesondere eine Lithium-lonen-Batteriezelle 20, umfassend zumindest ein Gehäuse 21 mit einem Plus- und Minus-Polanschluss 23, 24 sowie den Polen zugeordneten ersten und zweiten Elektroden, welche durch eine von Ionen durchdringbare Trennschicht voneinander getrennt sind. Um eine Korrosion des Batteriegehäuses, welches in der Regel aus Metall besteht zu vermeiden und für den Fall einer äußeren Beschädigung der Gehäuseisolation des Gehäuses 21 einen Kurzschluss zu vermeiden ist erfindungsgemäß vorgesehen, dass ein Polanschluss 23, 24 permanent mit dem Gehäuse 21 hochohmig verbunden ist. Durch die Verwendung einer hochohmigen Verbindung zwischen der Kathode einer Batteriezelle 20 mit dem Gehäuse 21 wird einerseits eine Korrosion des selbigen verhindert und andererseits die gegebenenfalls auftretenden hohen Ströme innerhalb der Batteriezelle 20 bei einem Kurzschluss über den Polanschluss 23, 24 vermieden.

## Beschreibung

Die Erfindung betrifft ein galvanisches Element, insbesondere eine Lithium-Ionen-Batteriezelle, umfassend zumindest ein Gehäuse in prismatischer oder zylindrischer Bauart mit einem Plus- und Minus-Polanschluss sowie den Polen zugeordneten ersten und zweiten Elektroden, welche durch eine von Ionen durchdringbare Trennschicht voneinander getrennt sind.

Lithium-lonen-Batteriezellen werden üblicherweise in ein Kunststoff- oder Metallgehäuse eingesetzt. Hierbei bieten Metallgehäuse aufgrund der Impermeabelität für Feuchtigkeit und Elektrolyt bessere Eigenschaften in Bezug auf Sicherheit und Langlebigkeit der Zellen. Üblicherweise wird hierbei Aluminium als Gehäusewerkstoff eingesetzt, wobei eine prismatische oder zylindrische Bauart verwendet werden kann.

Im Stand der Technik wird zur Zeit das Gehäusepotential entweder niederohmig auf das Kathodenpotential oder freischwebend zwischen Anoden- und Kathodenpotenzial gelegt. Beides hat Vor- und Nachteile.

Wird das Gehäusepotential niederohmig auf das Kathodenpotential gelegt, verhindert man die Korrosion des Aluminiumgehäuses und Kapazitätsverluste durch Interkalation von Lithium in das Aluminium des Gehäuses. Sicherheitstechnisch kann dies aber zum Problem werden, wenn die Gehäuseisolation zur nächsten Zelle oder zum Batteriegehäuse aus irgendwelchen Gründen beeinträchtigt ist und eine elektrische Verbindung entsteht. Hohe sicherheitsrelevante Ausgleichs- und Kurzschlussströme sind dann die Folge.

Wird das Gehäusepotential frei schwebend zwischen Anoden- und Kathodenpotential gelegt, kann es zu Gehäusekorrosion und in der Folge zu Undichtigkeiten mit Elektrolytaustritt kommen. Dies trifft immer dann zu, wenn durch einen Fehler oder Versehen das Gehäuse von außen auf negatives Potential gelegt wird.

Zur Vermeidung der aus dem Stand der Technik bekannten Probleme liegt der Erfindung die Aufgabe zugrunde, eine Korrosion des Gehäuses und sicherheitsrelevante Ausgleichströme bei Versagen der Zellenisolation zu vermeiden.

Erfindungsgemäß wird die Aufgabe dadurch gelöst, dass ein Polanschluss permanent mit dem Gehäuse hochohmig verbunden ist. Weitere vorteilhafte Ausgestaltungen sind den Unteransprüchen zu entnehmen.

Durch die permanente hochohmige Verbindung eines Polanschlusses mit dem Gehäuse wird einerseits eine Korrosion des Gehäuses verhindert und darüber hinaus beim Versagen der Zellenisolation vermieden, dass sicherheitsrelevante Ausgleichströme fließen können. Durch eine hochohmige Anbindung wird sichergestellt, dass nur geringe Ausgleichströme fließen können. Bevorzugt wird hierbei der Pluspol, beziehungsweise die Kathode mit dem Gehäuse hochohmig verbunden. Durch die Verbindung mit dem Pluspol wird erreicht, dass keine Korrosion des Gehäuses eintritt und durch eine hochohmige Anbindung eine Reduzierung der Ausgleichs- und Kurzschlussströme erfolgt.

Das galvanische Element besteht hierbei aus einer Lithium-Ionen-Batteriezelle, welche zu mehreren zu einer größeren Batteriezellenanordnung verbunden werden können. Zur Herstellung der Batteriezelle werden mehrere Elektroden jeweils für die Anode und Kathode einer Batteriezelle in eine Trennschicht eingewickelt. Jede Batteriezelle besteht hierbei aus einer Vielzahl von Elektroden, und zwar positive und negative Elektroden, welche jeweils eine Anschlussfahne aufweisen. Die Anordnung der positiven und negativen Elektroden erfolgt hierbei in der Regel so, dass die jeweiligen Anschlussfahnen einer Batteriezelle deckungskonform angeordnet sind und mit gleicher Polarität untereinander und mit einem Polanschluss verbunden werden können, sodass die Spannung der Batteriezellen von außen abgegriffen werden kann. Die einzelnen Batteriezellen werden über die Polanschlüsse in einer Reihenschaltung entsprechend der gewünschten Nennspannung zu einer Batteriezellenanordnung verbunden.

Um eine elektrisch leitende Verbindung mit dem Gehäuse und einem Polanschluss herzustellen, ist in weiterer Ausgestaltung der Erfindung vorgesehen, dass eine elektrische Verbindung mit dem Gehäuse durch eine leitfähige Polbolzenanbindung eines Polanschlusses erfolgt. Hierzu wird vorzugsweise der Pluspol, beziehungsweise die Kathode der Batteriezelle verwendet.

In der Regel befinden sich die Batteriezellen in einem Gehäuse, welches durch eine obere Abdeckung verschlossen wird. In der Abdeckung sind Durchführungen vorhanden, durch die die Polanschlüsse nach außen hindurch ragen. Soweit das Gehäuse und auch der Deckel aus einem metallisch leitenden Werkstoff besteht, werden die Polanschlüsse gegenüber dem Gehäusedeckel isoliert. Im Falle des Minuspols wird eine elektrisch nicht leitende Anbindung vorgenommen, während zur Herstellung einer hochohmigen Verbindung zwischen dem Pluspol und dem Gehäuse beispielsweise eine Polbolzenanbindung gewählt, welche einen ausgewählten Widerstandwert besitzt. Hierzu besteht die Möglichkeit, dass die Verbindung aus einer hochohmigen leitfähigen O-Ringdichtung, Flachdichtung, Polbolzenführung, Distanzscheibe oder einer Vergussmasse besteht. Ferner kann eine elektrische Verbindung durch eine Trennscheibe mit einem hochohmigen Widerstandswert mit dem Gehäuse erfolgen. Alternativ besteht die Möglichkeit, dass eine leitfähige Vergussmasse verwendet wird, welche um den Polanschluss herum ausgebildet ist und ebenfalls eine hochohmige elektrische Verbindung herstellt. Ebenso besteht die Möglichkeit eine innere oder äußere Distanzscheibe in einer leitfähigen Version einzusetzen. In diesem Fall muss die O-Ringdichtung nicht leitfähig sein. Als weitere Alternative besteht die Möglichkeit eine elektrische Verbindung durch einen Widerstand unmittelbar mit dem Gehäuse vorzunehmen, während der Polanschluss selbst durch eine nicht leitfähige Anbindung eingebettet ist. Soweit von einer hochohmigen Verbindung zwischen dem Gehäuse und einem Polanschluss ausgegangen wird, handelt es sich um eine gegenüber den Batterieverhältnissen hochohmige Verbindung, weil die Batteriezellen selbst Widerstandswerte unterhalb ein Ohm aufweisen. Der Wert hochohmig bezieht sich somit auf den Einsatz bei Batteriezellen.

Eine elektrische Verbindung kann beispielsweise aus intrinsischen oder durch leitfähige Zuschlagsstoffe, leitfähigen Polymeren, Metallen mit geringer Leitfähigkeit oder Halbmetallen hergestellt werden. Polymere können hierbei vorzugsweise bei O-Ringdichtung und Flachdichtungen eingesetzt werden, während bei einer Polbolzenführung Metalle mit geringer Leitfähigkeit oder Halbmetalle verwendet werden können. Eine Vergussmasse zum Eingießen des Polanschlusses in den Gehäusedeckel kann hierbei ebenfalls als elektrisch leitende Verbindung verwendet werden, sofern ein entsprechender hochohmiger Wert der Vergussmasse ausgewählt worden ist.

Der Widerstandswert entweder der Vergussmasse, der Trennscheiben oder O-Ringdichtung, beziehungsweise Flachdichtung liegt in einem Bereich von 10 Ohm bis 10 MOhm, vorzugsweise 100 Ohm bis 100 kOhm wodurch eine deutliche Verringerung möglicher Ausgleichströme erfolgt.

In weiterer Ausgestaltung der Erfindung ist vorgesehen, dass das Gehäuse zumindest abschnittsweise aus einem elektrisch leitfähigen Material besteht, wenn nicht das ganze Gehäuse als elektrisch leitfähig ausgebildet sein soll. Bevorzugter Werkstoff ist hierbei Aluminium aufgrund einer möglichen Gewichtreduzierung. Das Gehäuse kann zur äußeren Isolierung mit einer nicht leitenden Kunststoffbeschichtung versehen sein. Vorzugsweise wird als Gehäuseform eine Quaderform eingesetzt, weil diese eine optimale Raumausnutzung gewährleistet und die verwendeten Gehäuse bevorzugt hochkant eingesetzt werden können. Hierbei ist das Gehäuse allseitig bis auf den oberen Stirnbereich geschlossen, welcher mit einem Deckel verschließbar ist, durch den die beiden Polanschlüssen nach außen ragen. Der Deckel wird hierbei mit dem Gehäuse verschweißt, beispielsweise durch eine Laserverschweißung, sodass auch bei unsachgemäßer Handhabung der galvanischen Elemente kein Elektrolyt austreten kann und das Gehäuse gas- und flüssigkeitsdicht ausgebildet ist. Der Deckel kann ebenfalls mit einer nicht leitfähigen Beschichtung versehen sein. Zudem besteht die Möglichkeit, eine Deckelisolation vorzusehen, hinter der sich ein Einbauraum für beispielsweise eine Elektronikeinheit befindet. Alternativ kann ein flaches oder zylindrisches Gehäuse verwendet werden, bei dem die Polanschlüsse durch die beiden Stirnflächen nach außen ragen.

Die vorliegende Erfindung zeichnet sich durch die Besonderheit aus, dass vorzugweise das metallische Gehäuse eines galvanischen Elementes permanent hochohmig mit der Kathode verbunden ist, um sicherheitsrelevante Ausgleichsströme zu verhindern und gleichzeitig eine Korrosion des Gehäuses zu vermeiden. Durch diese Maßnahme wird eine wesentlich längere Lebensdauer der galvanischen Elemente erreicht. Für den Fall des Versagens einer Zellenisolation werden sicherheitsrelevante hohe Ausgleichströme vermieden.

Die Erfindung wird im Weiteren anhand der Figuren nochmals erläutert.

Es zeigt
- Fig. 1: in einer schematischen Darstellung die Verbindung zwischen einem Polanschluss und dem Gehäuse nach dem Stand der Technik,
- Fig. 2: in einer schematischen Darstellung eine weitere Ausführungsvariante ohne Verbindung zum Gehäuse, die ebenfalls dem Stand der Technik entspricht,
- Fig. 3: in einer schematischen Darstellung das Grundprinzip einer Verbindung eines Kathoden-Polanschlusses mit dem Gehäuse mittels eines leitfähigen O-Rings,
- Fig. 4: ein erstes konkretes Ausführungsbeispiel in einer schematischen Darstellung, um eine Verbindung mittels eines leitfähigen O-Rings zwischen Kathoden-Polanschluss mit dem Gehäuse herzustellen,
- Fig. 5: in einer schematischen Darstellung ein weiteres Ausführungsbeispiel zur Herstellung einer Verbindung mittels einer leitfähigen inneren Distanzscheibe mit dem Gehäuse,
- Fig. 6: in einer schematischen Darstellung eine weitere alternative Ausführungsform zur Verbindung mit dem Gehäuse durch eine leitfähige äußere Distanzscheibe,
- Fig. 7: in einer schematischen Darstellung eine Verbindung des Gehäuses mithilfe einer Vergussmasse,
- Fig. 8: in einer schematischen Darstellung eine Verbindung des Gehäuses mit einer leitfähigen Flachdichtung und
- Fig. 9: in einer schematischen Darstellung eine Verbindung eines zylinderförmigen Gehäuses mit einer leitfähigen Flachdichtung.

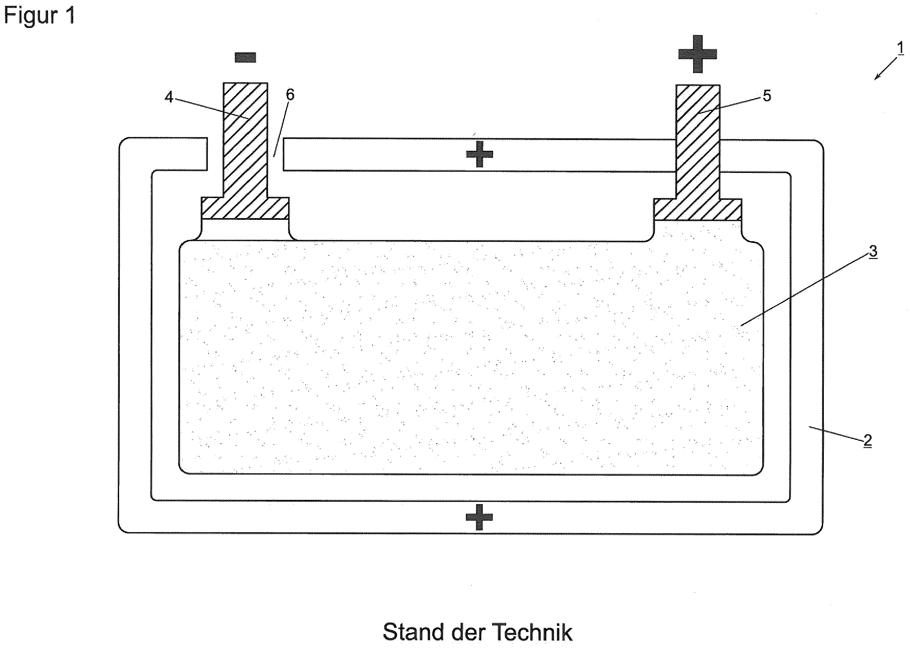

Figur 1 zeigt in einer schematischen Darstellung eine Ausführungsvariante, wie sie aus dem Stand der Technik bekannt ist. Eine Batteriezelle 1 weist ein Gehäuse 2 sowie ein Elektrodenanordnung 3 auf. Die Elektrodenanordnung 3 ist mit Polanschluss 4, 5 elektrisch leitfähig verbunden, wobei der Polanschluss 4 der Anode entspricht und der Polanschluss 5 der Kathode einer Batteriezelle 1. In dem gezeigten Ausführungsbeispiel ist der Polanschluss 4 gegenüber dem Gehäuse isoliert, was durch den Freiraum 6 angedeutet wird. Der Polanschluss 5 ist demgegenüber fest elektrisch leitend mit dem Gehäuse 2 verbunden, sodass das gesamte Gehäuse 2 zusammen mit dem Kathoden-Polanschluss niederohmig auf Plus-Potential liegt.

Dieser Stand der Technik ist problematisch, weil im Falle einer unsachgemäßen Behandlung oder äußeren Einwirkungen ein Kontakt zwischen dem Polanschluss 4 oder auch der Elektrodenanordnung 3 mit dem Gehäuse eintreten kann und dadurch hohe Kurzschlussströme entstehen, die zu einer Zerstörung der Batteriezelle 1 führen. Hintergrund ist, dass bei einer Batterie zwischen benachbarten Batteriezellen unterschiedliche Spannungspotentiale vorliegen und über die Batteriezellengehäuse niederohmige Kurzschlüsse entstehen können.

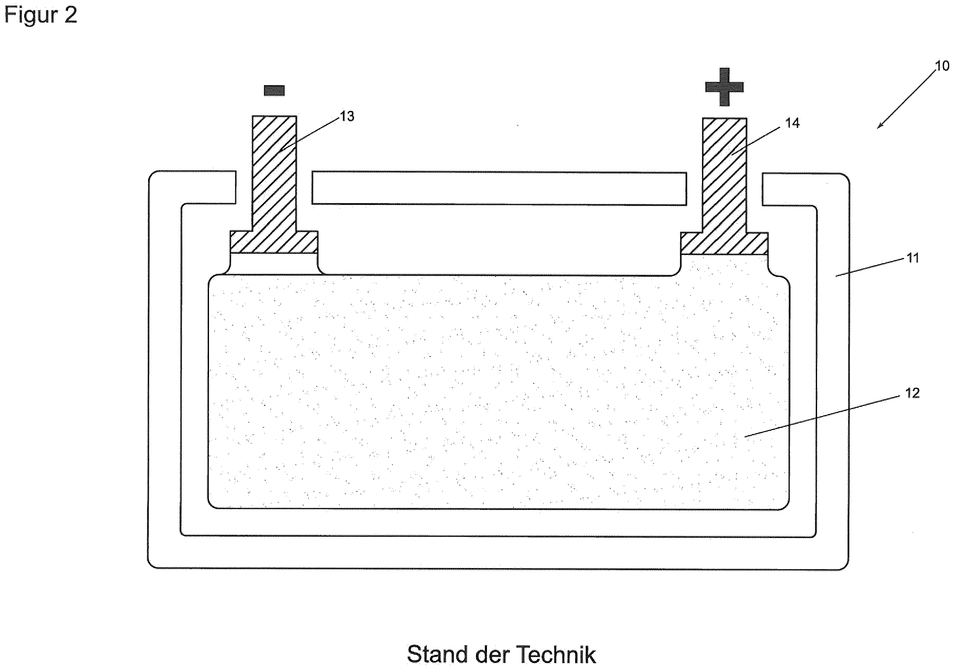

Figur 2 zeigt in einer schematischen Darstellung ein weiteres Ausführungsbeispiel, wie es aus dem Stand der Technik bekannt ist. In diesem Fall ist eine Batterie 10, umfassend ein Gehäuse 11 und eine Elektrodenanordnung 12 über die Polanschlüsse 13, 14 nicht mit dem Gehäuse verbunden. Insofern kann kein Kurzschluss bei einer Beschädigung von außen eintreten, es sei denn, dass die Beschädigung so gravierend ist, dass einzelne Batteriezellen vollständig kurzgeschlossen werden. Diese Ausführungsvariante kann jedoch im Fehlerfall zu einer Korrosion des Gehäuses 11 führen, sodass dieses undicht wird und der Elektrolyt ausläuft, was nicht gewünscht wird.

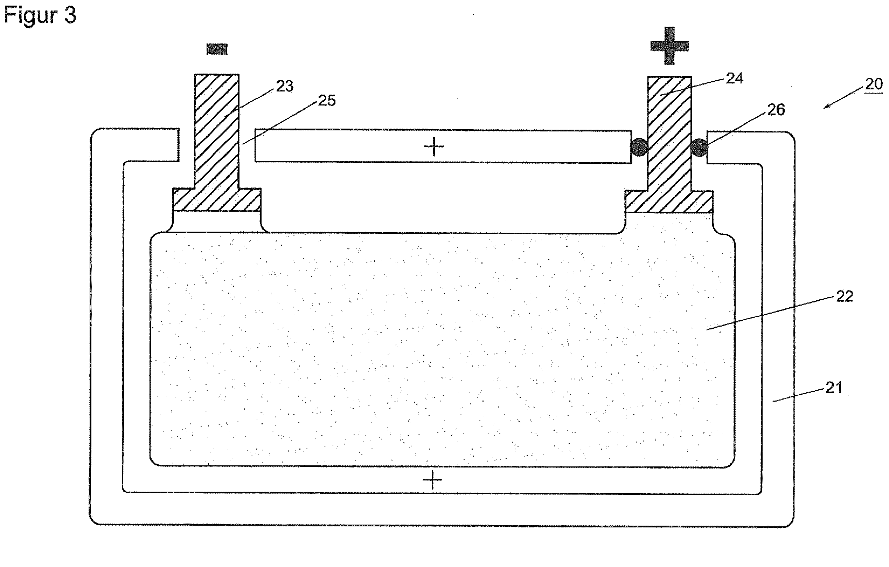

Figur 3 zeigt in einer schematischen Darstellung ein Ausführungsbeispiel nach der Erfindung. In diesem Fall besteht die Batteriezelle 20 aus einem Gehäuse 21, einer Elektrodenanordnung 22 und den Polanschlüssen 23, 24. Der Polanschluss 23 entsprechend der Anode ist hierbei isoliert gegenüber dem Gehäuse 21, was durch den Freiraum 25 um den Polanschluss 23 herum symbolisiert wird. Der Polanschluss 24 entspricht der Kathode. Durch einen leitfähigen O-Ring 26 wird schematisch dargestellt, dass eine elektrische Verbindung mit dem Gehäuse 21 vorliegt, sodass das gesamte Gehäuse 21 mit dem Plus-Potential verbunden ist.

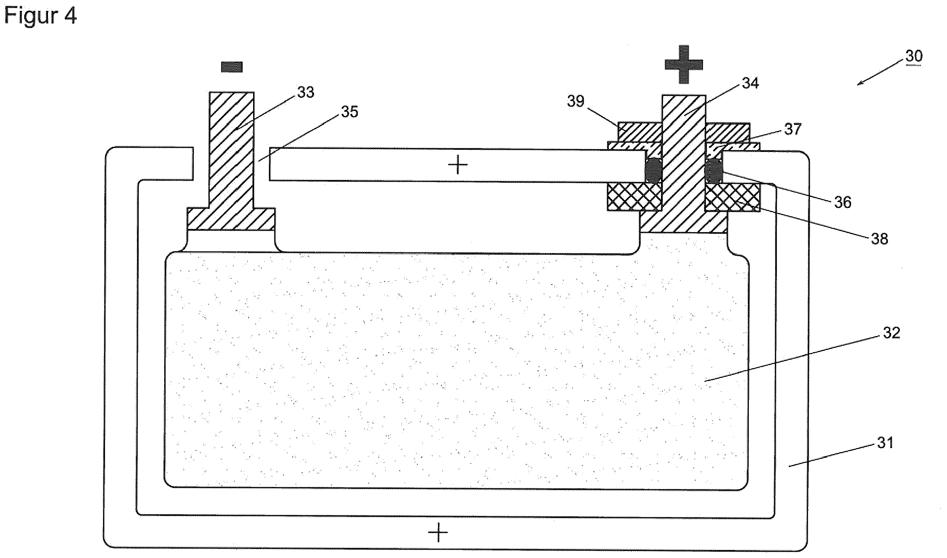

Figur 4 zeigt in einer schematischen Darstellung ein konkretes Ausführungsbeispiel einer Verbindung mit einem Gehäuse 31 für eine Batteriezelle 30, welche ebenfalls aus einem Gehäuse 31, einer Elektrodenanordnung 32 und einem Polanschluss 33, 34 besteht. Die Elektrodenanordnung 32 ist hinsichtlich des Anodenanschlusses mit dem Polanschluss 33 verbunden, welcher isolierend gegenüber dem Gehäuse angeordnet ist. Die Isolierung wird, wie in den vorhergehenden Fällen, durch den Freiraum 35 angedeutet. Der Polanschluss 34 für die Kathode ist demgegenüber durch einen O-Ring 36 elektrisch leitend mit dem Gehäuse 31 verbunden, wobei der O-Ring einen Widerstandswert von mindestens 10 Ohm aufweist. Der O-Ring 36 wird durch eine äußere Distanzscheibe 37 und eine innere Distanzscheibe 38 fixiert, wobei durch ein Verschlusselement 39 eine Verspannung der unteren und oberen Distanzscheibe 37, 38 erfolgt. Der O-Ring 36 liegt hierbei zwischen der inneren und äußeren Distanzscheibe 38, 37 und stellt die elektrische Kontaktierung zum Gehäuse 31 her.

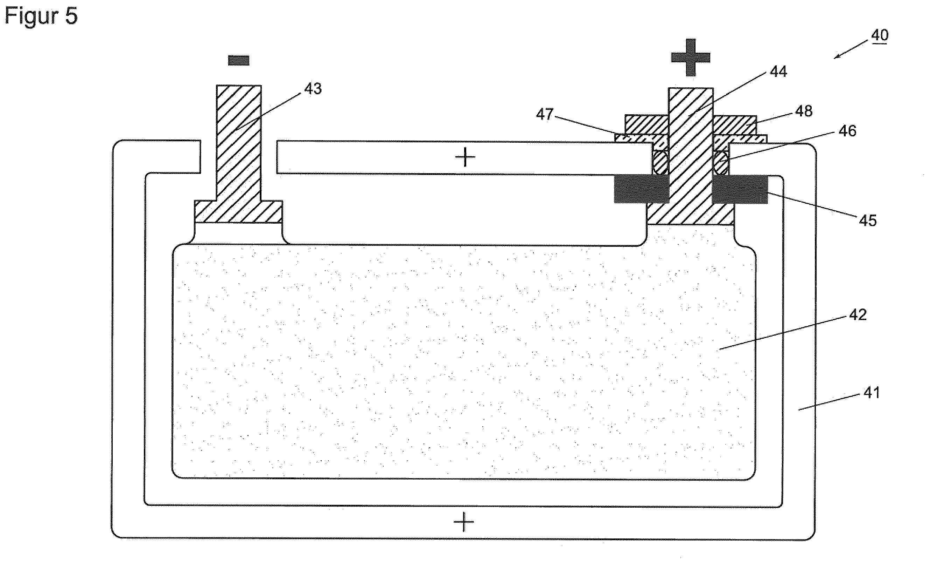

Figur 5 zeigt in einer schematischen Darstellung ein weiteres Ausführungsbeispiel einer Batteriezelle 40, die in diesem Fall ebenfalls aus einem Gehäuse 41, einer Elektrodenanordnung 42 und einem ersten Polanschluss 43 sowie einem zweiten Polanschluss 44 besteht. Der Polanschluss 43 mit negativem Potential stellt die Anode da und ist mit der Elektrodenanordnung 42 verbunden, besitzt aber keine Verbindung zum Gehäuse 41. Der Polanschluss 44 ist mit dem positiven Potential der Elektrodenanordnung 42 verbunden und stellt die Kathode dar, die in diesem Fall über eine innere Distanzscheibe 45 die elektrische Leitfähigkeit zum Gehäuse 41 herstellt. Die innere Distanzscheibe 45 weist hierbei einen Widerstandswert von mehr als 10 Ohm auf. Die innere Distanzscheibe 45 liegt unterhalb eines O-Ringes 46, der nicht leitfähig ist. Der O-Ring 46 ist hierbei zwischen der inneren Distanzscheibe 45 und der äußeren Distanzscheibe 42 eingebettet und wird mit einem Verschlusselement 48 fixiert.

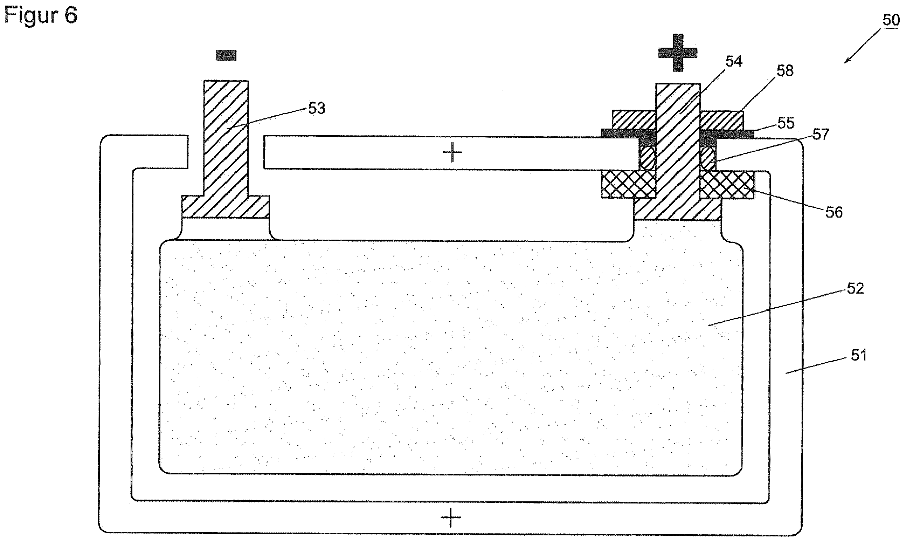

Figur 6 zeigt in einer schematischen Ansicht ein weiteres Ausführungsbeispiel einer Batteriezelle 50, welche wiederum aus einem Gehäuse 51, einer Elektrodenanordnung 52 und einem ersten Polanschluss 53 sowie einem zweiten Polanschluss 54 besteht. Der Polanschluss 53 stellt die Anode dar und ist dem negativen Potential der Elektrodenanordnung 52 verbunden, während demgegenüber der Polanschluss 54 mit dem Pluspol der Elektrodenanordnung 52 verbunden ist und die Kathode darstellt. Die elektrisch leitfähige Verbindung zwischen dem Polanschluss 54 und dem Gehäuse 51 erfolgt in diesem Fall durch die äußere Distanzscheibe 55. Sowohl die innere Distanzscheibe 56 als auch der O-Ring 57 sind nicht leitend ausgebildet und werden durch ein Verschlusselement 58 fixiert.

Selbstverständlich besteht die Möglichkeit, dass nicht nur die äußere oder innere Distanzscheibe elektrisch leitfähig ist, gegebenenfalls auch der O-Ring, sondern es können auch mehrere Teile elektrisch leitfähig sein, sofern sichergestellt ist, dass der Widerstandswert in den beschriebenen Grenzen liegt.

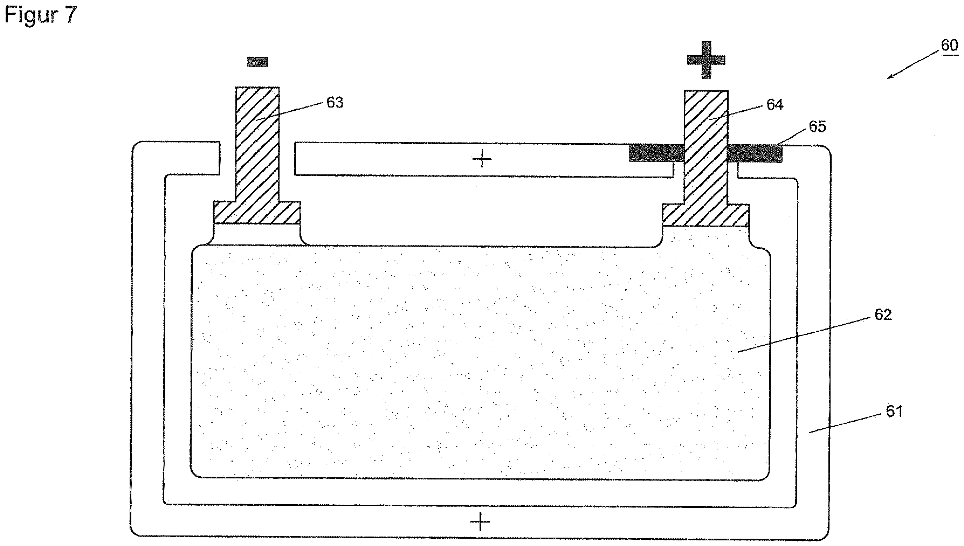

Figur 7 zeigt eine Batteriezelle 60, welche aus einem Gehäuse 61 und einer Elektrodenanordnung 62 besteht, welches mit einem ersten Polanschluss 63 und einem zweiten Polanschluss 64 elektrisch leitend verbunden ist. Der Polanschluss 63 als Anode ist wiederum isoliert gegenüber dem Gehäuse 61, während der Polanschluss 64 als Kathode über eine elektrisch leitfähige Verbindung mit dem Gehäuse 61 kontaktiert ist. In diesem Fall ist der Polanschluss 64 durch eine Vergussmasse 65 in dem Gehäuse 61 eingebettet. Die Vergussmasse 65 besitzt ebenfalls einen Widerstandswert, welcher größer als 10 Ohm ist, sodass eine hochohmige Verbindung der Elektrodenanordnung 62 mit dem Gehäuse 61 erfolgt.

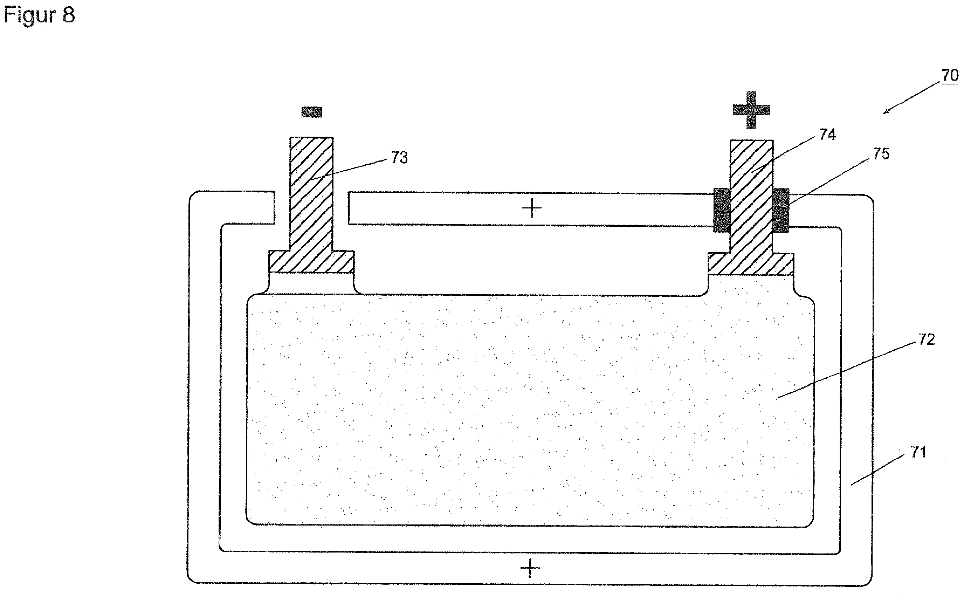

Figur 8 zeigt ein weiteres Ausführungsbeispiel einer Batteriezelle 70, welche eine elektrische Verbindung mit dem Gehäuse 71 aufweist. Die Batteriezelle 70 besteht aus dem Gehäuse 71, einer Elektrodenanordnung 72, einem ersten Polanschluss 73 und einem zweiten Polanschluss 74. Wie in den vorhergehenden Ausführungsbeispielen ist der Polanschluss 73 als Anode elektrisch isolierend gegenüber dem Gehäuse 71 gelagert, während demgegenüber der Polanschluss 74 eine elektrische Kontaktierung erlaubt, die in diesem Fall durch eine elektrisch leitfähige Flachdichtung 75 erfolgt. Auch hierfür gilt wiederum, dass die Flachdichtung 75 einen Widerstandswert von mindestens 10 Ohm aufweist.

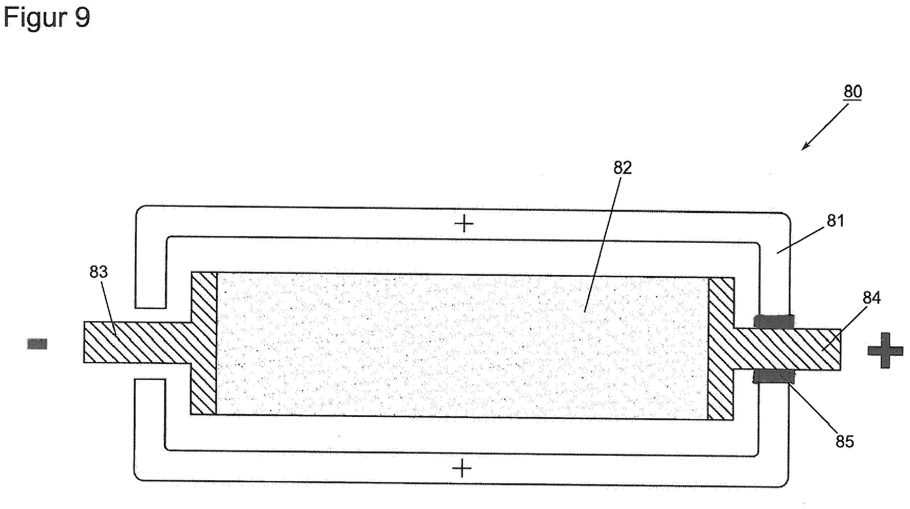

Figur 9 zeigt ein weiteres Ausführungsbeispiel für eine zylindrische Batteriezelle 80, welche eine elektrische Verbindung mit dem Gehäuse 81 aufweist. Die Batteriezelle 80 besteht aus dem Gehäuse 81, einer Elektrodenanordnung 82, einem ersten Polanschluss 83 und einem Polanschluss 84. Der Polanschluss 83 als Anode ist elektrisch isolierend gegenüber dem Gehäuse 81 gelagert, während demgegenüber der Polanschluss 84 eine elektrische Kontaktierung durch eine elektrisch leitfähige Flachdichtung 85 aufweist. Auch in diesem Fall gilt, dass die Flachdichtung 85 einen Widerstandswert von mindestens 10 Ohm aufweist. Im Gegensatz zu den bisherigen Ausführungsvarianten sind die beiden Polanschlüsse 83, 84 jeweils in den Stirnflächen der zylindrischen Batteriezelle 80 herausgeführt. Anstelle einer zylindrischen Batteriezelle 80 könnte es sich auch um eine flach angeordnete Batteriezelle handeln, bei der ebenfalls die Polanschlüsse oder Ableiterfahnen in den Stirnflächen herausragen.

Die gezeigten Ausführungsbeispiele ermöglichen eine elektrische Kontaktierung mit einem hochohmigen Übergang zu den Gehäusen, sodass aufgrund des Gehäusepotentials eine Korrosion des Gehäuses verhindert werden kann und darüber hinaus bei einer äußeren Beschädigung der Batterie sichergestellt ist, dass keine hohen Kurzschlussströme über die leitfähigen Elemente, welche den Polanschluss der Kathode umgeben, auftreten können.

### Bezugszeichenliste

- 1: Batteriezelle
- 2: Gehäuse
- 3: Elektrodenanordnung
- 4: Polanschluss
- 5: Polanschluss
- 6: Freiraum
- 10: Batteriezelle
- 11: Gehäuse
- 12: Elektrodenanordnung
- 13: Polanschluss
- 14: Polanschluss
- 20: Batteriezelle
- 21: Gehäuse
- 22: Elektrodenpaket
- 23: Polanschluss
- 24: Polanschluss
- 25: Freiraum
- 26: O-Ring
- 30: Batteriezelle
- 31: Gehäuse
- 32: Elektrodenanordnung
- 33: Polanschluss
- 34: Polanschluss
- 35: Freiraum
- 36: O-Ring
- 37: Distanzscheibe
- 38: Distanzscheibe
- 39: Verschlusselement
- 40: Batteriezelle
- 41: Gehäuse
- 42: Elektrodenanordnung
- 43: Polanschluss
- 44: Polanschluss
- 45: Distanzscheibe
- 46: O-Ring
- 48: Verschlusselement
- 50: Batteriezelle
- 51: Gehäuse
- 52: Elektrodenanordnung
- 53: Polanschluss
- 54: Polanschluss
- 55: Distanzscheibe
- 56: Distanzscheibe
- 57: O-Ring
- 58: Verschlusselement
- 60: Batteriezelle
- 61: Gehäuse
- 62: Elektrodenanordnung
- 63: Polanschluss
- 64: Polanschluss
- 65: Vergussmasse
- 70: Batteriezelle
- 71: Gehäuse
- 72: Elektrodenanordnung
- 73: Polanschluss
- 74: Polanschluss
- 75: Flachdichtung
- 80: Batteriezelle
- 81: Gehäuse
- 82: Elektrodenanordnung
- 83: Polanschluss
- 84: Polanschluss
- 85: Flachdichtung

## Patentansprüche

1. Galvanisches Element, insbesondere eine Lithium-Ionen-Batteriezelle (20, 30, 40, 50, 60, 70, 80), umfassend zumindest ein Gehäuse (21, 31, 41, 51, 61, 71, 81) in prismatischer oder zylindrischer Bauart mit einem Plus- und Minus-Polanschluss (23, 24, 33, 34, 43, 44, 53, 54, 63, 64, 73, 74, 83, 84) sowie den Polen zugeordneten ersten und zweiten Elektroden, welche durch eine von Ionen durchdringbare Trennschicht voneinander getrennt sind,
**dadurch gekennzeichnet,**
**dass** ein Polanschluss (23, 24, 33, 34, 43, 44, 53, 54, 63, 64, 73, 74, 83, 84) permanent mit dem Gehäuse (21, 31, 41, 51, 61, 71, 81) hochohmig verbunden ist.

2. Galvanisches Element nach Anspruch 1,
**dadurch gekennzeichnet,**
**dass** der Pluspol, beziehungsweise die Kathode mit dem Gehäuse (21, 31, 41, 51, 61, 71, 81) verbunden ist.

3. Galvanisches Element nach Anspruch 1 oder 2,
**dadurch gekennzeichnet,**
**dass** die Batteriezelle (20, 30, 40, 50, 60, 70, 80) aus einer Anzahl von parallel geschalteten Elektroden für die Anode und Kathode besteht.

4. Galvanisches Element nach einem der Ansprüche 1, 2 oder 3,
**dadurch gekennzeichnet,**
**dass** mehrere Elektrodenpaare einer Batteriezelle (20, 30, 40, 50, 60, 70, 80) getrennt durch eine Trennschicht eingewickelt sind und mit den Polanschlüssen (23, 24, 33, 34, 43, 44, 53, 54, 63, 64, 73, 74) der Batteriezellen (20, 30, 40, 50, 60, 70, 80) verbunden sind.

5. Galvanisches Element nach einem der Ansprüche 1 bis 4,
**dadurch gekennzeichnet,**
**dass** die Elektroden eine Anschlussfahne aufweisen, welche mit gleicher Polarität untereinander und mit einem Polanschluss (23, 24, 33, 34, 43, 44, 53, 54, 63, 64, 73, 74, 83, 84) verbunden sind.

6. Galvanisches Element nach einem der Ansprüche 1 bis 5,
**dadurch gekennzeichnet,**
**dass** eine elektrische Verbindung mit dem Gehäuse (21, 31, 41, 51, 61, 71, 81) durch ein leitfähiges Polbolzenelement eines Polanschlusses (23, 24, 33, 34, 43, 44, 53, 54, 63, 64, 73, 74, 83, 84) erfolgt.

7. Galvanisches Element nach einem der Ansprüche 1 bis 6,
**dadurch gekennzeichnet,**
**dass** die Verbindung aus einer leitfähigen O-Ringdichtung (36), Flachdichtung (75, 85), Polbolzenführung, Distanzscheibe (37, 38, 45, 48, 55, 56) oder Vergussmasse (65) besteht.

8. Galvanisches Element nach einem der Ansprüche 1 bis 7,
**dadurch gekennzeichnet,**
**dass** eine elektrische Verbindung eines Polanschluss (23, 24, 33, 34, 43, 44, 53, 54, 63, 64, 73, 74, 83, 84) durch eine Vergussmasse (65) mit dem Gehäuse (21, 31, 41, 51, 61, 71, 81) erfolgt, welche um den Polanschluss (23, 24, 33, 34, 43, 44, 53, 54, 63, 64, 73, 74, 83, 84) herum ausgebildet ist, und/oder dass eine elektrische Verbindung durch eine Distanzscheibe (37, 38. 45, 55, 56) mit einem hochohmigen Widerstandswert mit dem Gehäuse (21, 31, 41, 51, 61, 71, 81) erfolgt, und/oder dass eine elektrische Verbindung durch einen Widerstand mit dem Gehäuse (21, 31, 41, 51, 61, 71, 81) erfolgt.

9. Galvanisches Element nach einem der Ansprüche 1 bis 8,
**dadurch gekennzeichnet,**
**dass** eine elektrische Verbindung aus intrinsischen oder durch leitfähige Zuschlagsstoffe, leitfähigen Polymeren, Metalle mit geringer Leitfähigkeit oder Halbmetallen besteht.

10. Galvanisches Element nach einem der Ansprüche 1 bis 9,
**dadurch gekennzeichnet,**
**dass** der Widerstandswert 10 Ohm bis 10 MOhm, vorzugsweise 100 Ohm bis 100 kOhm beträgt.

11. Galvanisches Element nach einem oder mehreren der Ansprüche 1 bis 10,
**dadurch gekennzeichnet,**
**dass** das Gehäuse (21, 31, 41, 51, 61, 71, 81) zumindest abschnittsweise aus einem elektrisch leitfähigen Material besteht.

12. Galvanisches Element nach einem oder mehreren der Ansprüche 1 bis 11,
**dadurch gekennzeichnet,**
**dass** das Gehäuse (21, 31, 41, 51, 61, 71, 81) aus Aluminium oder anderen Metallen besteht.

13. Galvanisches Element nach einem oder mehreren der Ansprüche 1 bis 12,
**dadurch gekennzeichnet,**
**dass** das Gehäuse (21, 31, 41, 51, 61, 71, 81) prismatisch oder zylindrisch ausgebildet ist und hochkant verwendbar ist, und/oder dass das Gehäuse (21, 31, 41, 51, 61, 71, 81) eine offene Stirnfläche aufweist, welche mit einem Deckel verschließbar ist, und/oder dass im Deckel die beiden Polanschlüsse (23, 24, 33, 34, 43, 44, 53, 54, 63, 64, 73, 74) angeordnet sind, und/oder dass das Gehäuse (21, 31, 41, 51, 61, 71, 81) mit Polanschlüssen oder Ableitfahnen versehen ist, welche aus den Stirnflächen herausragen.

14. Galvanisches Element nach einem oder mehreren der Ansprüche 1 bis 13,
**dadurch gekennzeichnet,**
**dass** das Gehäuse (21, 31, 41, 51, 61, 71, 81) gas- und flüssigkeitsdicht ausgebildet ist.
